# EUROPÄISCHE PATENTANMELDUNG

(11) **EP 0 830 968 A1**
(43) Veröffentlichungstag der Anmeldung: **25.03.1998**
(21) Anmeldenummer: 96114943.2
(22) Anmeldetag: 18.09.1996
(51) Int. Cl.: B60L 11/12, B60L 11/02

(54) **Verfahren zum Betrieb eines nichtspurgebundenen Hybridfahrzeuges**

(71) Anmelder: SMH Management Services AG, CH-2501 Biel (CH)
(72) Erfinder: del Re,Luigi, 8053 Zürich (CH); Francescutto,Gianni, 2504 Biel (CH); Theurillat,Patrick, 1400 Yverdon-les-Bains (CH); Apter, Robert, 1400 Yverdon-les-Bains (CH)
(74) Vertreter: Patry, Didier Marcel Pierre

(57) **Zusammenfassung**

Das erfindungsgemässe Betriebsverfahren sieht bei einer anstehenden Drehzahländerung des Verbrennungsmotors (11, Mth) eines Hybridfahrzeuges vor, die Batterie (20) unabhängig von der auf die Antriebsräder (19) zu übertragenen Leistung gezielt so zu laden oder zu entladen, dass die Drehzahländerung möglichst rasch erfolgt und hinsichtlich Kraftstoffverbrauch, Schadstoffemission, Lärmbildung und/oder Maschinenschonung optimale Arbeitspunkte durchlaufen werden.
Es ist einerseits im Fall einer anstehenden Leistungserhöhung des Verbrennungsmotos (11, Mth) vorgesehen, die Batterie (20, Bat) je nach Ausgangslage stärker zu entladen oder weniger stark zu laden und im Fall einer anstehenden Leistungsreduktion stärker zu laden oder weniger stark zu entladen.

## Beschreibung

Die Erfindung betrifft ein Verfahren zum Betrieb eines nicht-spurgebundenen Hybridfahrzeuges nach dem Oberbegriff des Anspruchs 1.

Die in der Veröffentlichungsschrift EP 556 942 gezeigte Lösung bezieht sich auf ein nicht-spurgebundenes Serie-Hybridfahrzeug mit einem Verbrennungsmotor, einem an dessen Kurbelwelle gekoppelten Generator, einer Leistungselektronik, einer elektronischen Steuerung sowie mindestens einem elektrischen Antriebsmotor.

Da der Fahrzeugbenutzer im allgemeinen eine Fahrzeugbeschleunigung erwartet, wenn er das Fahrpedal stärker betätigt, ist ein unverzüglicher, monotoner Anstieg des Antriebsdrehmomentes ohne Zugkrafteinbruch und ein entsprechender, monotoner Anstieg des Generatordrehmomentes erforderlich (Spalte 5, Zeile 33 bis 41).

Unter dieser Voraussetzung steigt die Antriebs- und die Generatorleistung aufgrund der physikalischen Beziehung "Leistung gleich Drehmoment mal Drehzahl" ebenfalls monoton an (Spalte 5, Zeile 8 bis 15 sowie 42 bis 49).

In der EP 556 942 wird nun für den genannten Fall einer anstehenden Leistungserhöhung des Verbrennungsmotors vorgeschlagen, das vom Generator aufgenommene Drehmoment zunächst nicht in dem Mass ansteigen zu lassen, wie dies beim intern im Verbrennungsmotor erzeugten Drehmoment der Fall ist (Spalte 5, Zeile 15 bis 21).

Der dadurch entstehende Leistungsüberschuss des Verbrennungsmotors bewirkt, dass dessen Drehzahl rascher zunehmen kann und die Soll-Leistung baldmöglichst zur Verfügung steht (Spalte 5, Zeile 22 bis 29).

Der Nachteil dieser Lösung liegt jedoch darin, dass eine schnellere Drehzahlerhöhung des Verbrennungsmotors zwangsläufig auf Kosten der Fahrzeugbeschleunigung erreicht wird. Die beiden Kriterien "rasche Drehzahlerhöhung" sowie "unverzüglicher Anstieg der Antriebsleistung" schränken sich gegenseitig ein.

Im einen Extremfall ist zwar eine rasche Drehzahlerhöhung und somit ein schnelles Erreichen der angestrebten Leistung des Verbrennungsmotors möglich, jedoch ist während diesem Beschleunigungintervall höchstens eine geringfügige Fahrzeugbeschleunigung möglich. Die gewünschte Fahrzeugbeschleunigung tritt verzögert erst beim Erreichen der Soll-Drehzahl ein.

Umgekehrt hat eine unmittelbare Fahrzeugbeschleunigung zur Folge, dass sich die Drehzahl des Verbrennungsmotors nur langsam erhöht und die schlussendlich angestrebte Fahrleistung erst allmählich erreicht wird. Dadurch, dass der Generator den Verbrennungsmotor in diesem Fall stark belastet, sind ausserdem der Wahl von optimalen Betriebspunkten im Drehmoment-Drehzahl-Kennlinienfeld enge Grenzen gesetzt. Beispielsweise kann während der Beschleunigungsphase auf diese Weise kaum ein minimaler Kraftstoffverbrauch erzielt werden.

Im Fall einer vorgesehenen Leistungssenkung des Verbrennungsmotors wird das vom Generator aufgenommene Drehmoment im Gegensatz zum vorgängig beschriebenen Fall stets grösser als das vom Verbrennungsmotor erzeugte Drehmoment gehalten. Analog sinkt hier die Generatorleistung monoton bis zum Erreichen des neuen Betriebspunktes des Verbrennungsmotors (Spalte 5, Zeile 50 bis 58 und Spalte 6, Zeile 1 bis 6). Es wird jedoch nicht erwähnt, was während einer solchen Betriebspunktänderung mit der überschüssigen Generatorleistung geschieht.

Der Erfindung liegt daher die Aufgabe zugrunde, ein Verfahren zur Betriebszustandsänderung eines Verbrennungsmotors eines Hybridfahrzeuges zu finden, welches während einer Übergangsperiode ausgehend von einem Ist-Betriebszustand und übergehend in einen Soll-Betriebszustand unabhängig von der auf das mindestens eine Antriebsrad zu übertragenden Leistung eine rasche Drehzahlanpassung bei optimalen Betriebsbedingungen des Verbrennungsmotors ermöglicht.

Die Lösung der erfindungsgemässen Aufgabe ergibt sich aus den Merkmalen der Anspruchs 1.

Bevorzugte Ausführungsformen sind in den abhängigen Ansprüchen gegeben.

Das erfindungsgemässe Betriebsverfahren gewährleistet während Betriebszustandsänderungen des Verbrennungsmotors durch den gezielten Einsatz eines Energiespeichers eine in Bezug auf die Leistung vollständige Entkopplung der Antriebsräder vom Verbrennungsmotor, wodurch
- einerseits eine unmittelbare, wirkungsvolle Erhöhung bzw. Senkung der gewünschten Fahrzeugleistung, d.h. der auf die Antriebsräder übertragenen Leistung, und
- anderseits eine rasche Drehzahlerhöhung bzw. -senkung bei optimalen Betriebsbedingungen des Verbrennungsmotors ermöglicht wird.
Durch diese Entkopplung kann der Verbrennungsmotor auch während einer Betriebszustandsänderung, d.h. während einer Drehzahlerhöhung bzw. -senkung insbesondere hinsichtlich Kraftstoffverbrauch, Schadstoffemission, Lärmbildung und/oder Maschinenschonung optimal betrieben werden. Der Einfachheit halber wird im folgenden anstelle von optimalem Kraftstoffverbrauch, Schadstoffemission, Lärmbildung und/oder Maschinenschonung kurz von optimalen Betriebsbedingungen gesprochen.

Genauere Angaben und Erklärungen hierzu sind weiter untenstehend aufgeführt.

Die erfindungsgemässe Lösung ist für verschiedene Arten von Hybridfahrzeugen vorgesehen und insbesondere für Serie- und Parallel-Hybridfahrzeuge sowie Mischtypen gleichermassen vorteilhaft. Ebenso kann als thermische Energiequelle, die hier mit Verbrennungsmotor bezeichnete ist, grundsätzlich beispielsweise ein Diesel- oder Ottomotor mit Drosselklappe oder Einspritzung, eine Gasturbine, eine Brennstoffzelle usw eingesetzt werden.

Im folgenden sind rein beispielsweise verschiedene Serie- und Parallel-Hybridfahrzeuge beschrieben, bei welchen die erfinderische Lösung angewendet werden kann:

Ein Serie-Hybridfahrzeug weist grundsätzlich einen Verbrennungsmotor, auch als thermischer Motor oder Brennkraftmaschine bezeichnet, einen an dessen Kurbelwelle angekoppelten Generator, einen oder mehrere elektrische Antriebsmotoren, die zum Beispiel direkt als Radnabenmotoren auf Antriebsräder wirken und nebst dem Verbrennungsmotor als zweite Energiequelle eine Batterie auf. Die Batterie wird im Stand der Technik ausschliesslich als Grundlast-Energiequelle eingesetzt, d.h. im Dauerbetrieb zur Speisung der Elektro-Antriebsmotoren, wie es beispielsweise aus der EP 543 390 hervorgeht, nicht aber als Mittel, um die Verbrennungsmotor kurzzeitig bei einer Betriebszustandänderung gezielt zu entlasten.

Im Gegensatz zum Serie-Hybridfahrzeug weist ein Parallel-Hybridfahrzeug zwischen Verbrennungsmotor und den Antriebsrädern eine direkte mechanische, beispielsweise aus Getriebe, Kupplung und Differenzialgetriebe bestehende Verbindung auf, wie sie bei den meisten herkömmlichen Personenkraftwagen vorkommt. Parallel zu diesem mechanischen Antriebsstrang steht eine Batterie in elektrischer Verbindung mit Elektro-Antriebsmotoren, die ebenfalls auf die Antriebsräder wirken. Gemäss der WO 091/08123 kann der Verbrennungsmotor auf die Vorderachse wirken, während ein Elektro-Antriebsmotor nur mit der Hinterachse verbunden ist. Weiter sind Varianten veröffentlicht worden, bei denen keine unmittelbare mechanische Kopplung der Elektro-Antriebsmotoren mit den Antriebsrädern oder -achsen vorgesehen ist, wie es beispielsweise EP 584 090 zeigt, sondern eine Kopplung zwischen Verbrennungsmotor und Getriebe oder zwischen Getriebe und Differenzialgetriebe.

Ferner weisen Hybridfahrzeuge selbstverständich verschiedene Steuer- und Regelschaltkreise auf, wie beispielsweise eine Motorsteuerung, die im Fall eines Dieselmotors in Abhängigkeit der Fahrpedalstellung, der Motordrehzahl, der Fahrgeschwindigkeit, der Kraftstoff-, Ansaugluft- und Kühlmitteltemperatur, des Saugrohrdruckes usw die Einspritzmenge, den Einspritzzeitpunkt, die Abgasrückführung usw bestimmt. Ausserdem ist meistens eine sogenannte Fahrzeug-Management-Einheit vorhanden, welche beispielsweise über Motordaten, Information über den Ladezustand der Batterie, über das Fahrzeug allgemein, über die im Falle eines Serie-Hybridfahrzeuges vom Generator erzeugte Spannung usw verfügt und das Zusammenspiel des Verbrennungsmotor, der elektrischen Maschinen, der Batterie usw regelt und überwacht. Selbstverständlich kann die Motorsteuerung integraler Bestandteil der Fahrzeug-Management-Einheit sein.

Hinzu kommt eine Ansteuerschaltung für die Elektro-Antriebsmotoren, welche die von der Batterie kommende Energie und im Fall eines Serie-Hybridfahrzeug zusätzlich diejenige des Generators wandelt und den Antriebsmotoren zuführt. Dabei kann es sich um einen DC/AC-Konverter handeln.

Weiter ist eine Batterie-Ladeschaltung vorgesehen, welche den Lade- oder Entladestrom unter Berücksichtigung des Ladezustandes der Batterie regelt. Batterie-Ladeschaltungen und Batterie-Regelverfahren sind bereits in grosser Anzahl bekannt und die meisten davon können für das erfinderische Verfahren eingesetzt werden, so dass nicht näher darauf eingegangen werden muss. Grundsätzlich ist es ferner auch möglich, anstelle von Batterien, Akkumulatoren oder Ultrakapazitoren beispielsweise mechanische Schwungradspeicher mit elektrischem Antrieb einzusetzen.

Nachfolgend ist das erfindungsgemässe Verfahren rein beispielsweise anhand eines Serie-Hybridfahrzeuges und der Zeichungen näher erläutert. Es zeigen:
- Fig.1 Blockschema einer Antriebseinheit eines Serie-Hybridfahrzeuges,
- Fig.2a Leistungs-Zeitdiagramm eines erstes Beispiels für den Fall einer Leistungs- bzw. Drehzahlerhöhung des Verbrennungsmotors,
- Fig.2b Drehmoment-Drehzahldiagramm zu Fig.2a,
- Fig.3a Leistungs-Zeitdiagramm eines zweiten Beispiels für den Fall einer Leistungs- bzw. Drehzahlerhöhung des Verbrennungsmotors,
- Fig.3b Drehmoment-Drehzahldiagramm zu Fig.3a.
- Fig.4a Leistungs-Zeitdiagramm eines dritten Beispiels für den Fall einer Leistungs bzw. Drehzahlsenkung des Verbrennungsmotors,
- Fig.4b Drehmoment/Drehzahldiagramm zu Fig.4a.

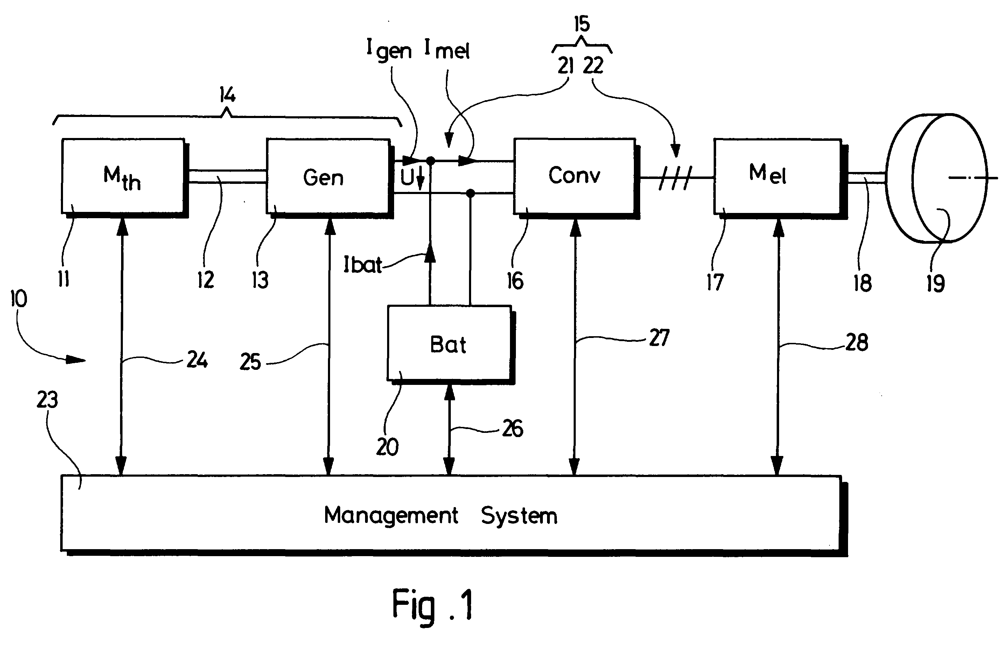

Die in Figur 1 dargestellte Antriebseinheit 10 eines Serie-Hybridfahrzeuges zeigt einen Verbrennungsmotor (Mth) 11, an dessen Kurbelwelle 12 eventuell über ein nicht dargestelltes Getriebe eine als Generator betreibbare, elektrische Maschine (Gen) 13 angekoppelt ist. Die aus Verbrennungsmotor 11 und Generator 13 bestehende Verbrennungsmotor-Generatoreinheit ist mit 14 bezeichnet. Über eine elektrische Verbindung 15 und einen zwischengeschalteten Wandler 16 (Conv) steht der Generator 13 in Energieübertragungsverbindung mit mindestens einer als Motor betreibbaren, weiteren Elektromaschine (Mel) 17, welche beispielsweise in Form einer Asynchronmaschine die vom Generator 13 abgegebene elektrische Leistung aufnimmt und über eine mechanische Verbindung 18 auf ein Antriebsrad 19 überträgt. Diese Elektromaschine 17 kann im Rekuperationsfall auch als Generator arbeiten.

Zusätzlich zum Generator 13 steht ausserdem ein elektrischer Energiespeicher 20 (Bat) über den Wandler 16 in elektrischer Energieübertragungsverbindung mit dem Elektromotor 17. In der Figur 1 ist nur ein Elektomotor 17 und ein Antriebsrad 19 dargestellt. Eine vorteilhafte Lösung stellen hingegen jeweils direkt auf mehrere Antriebsräder montierte Radnabenmotoren dar.

Davon ausgehend, dass als Energiespeicher 20 aufladbare Batterien vorgesehen sind, ist der zwischen Generator 13 und Wandler 16 angeordnete Teil der elektrischen Verbindung 15 eine Gleichstromverbindung 21 mit einer Gleichspannung U. Dabei weist die Gleichstromverbindung 21 einen Knoten auf, in welchem drei Ströme, der Strom des Generators 13, bezeichnet mit Igen, derjenige der Batterie 20, bezeichnet mit Ibat, und derjenige des Wandlers 16, bezeichnet mit Imel, zusammengeführt werden. Die entsprechenden Stromrichtungspfeile betreffen den Fall, bei welchem der Generator 13 sowie die Batterie 20 elektrische Energie an den Wandler 16 abgeben.

Im Fall von Asynchron-Antriebsmotoren 17 ist als Wandler 16 ein DC/AC-Wandler vorgesehen. Ausgangsseitig des DC/AC-Wandlers 16 ist die elektrische Verbindung 15 als Mehrphasen-Wechselstromverbindung 22 ausgebildet.

Mit 23 ist eine Fahrzeug-Management-Einheit (MS) bezeichnet, welche über Signalverbindungen 24 bis 28 in Kontakt mit dem Verbrennungsmotor 11, dem Generator 13, der Batterie 20, dem Wandler 16 und dem Elektromotor 17 steht. In der Fahrzeug-Management-Einheit 23 kann ebenfalls eine Motorsteuerung, welche den Verbrennungsmotor 11 regelt, und eine Lade- und Entladeschaltung für die Batterie integriert sein. Mit dieser Integration wird besonders bei Hybridfahrzeugen eine erhebliche Kostenreduktion erzielt.

Nicht dargestellt sind beispielsweise verschiedene Bedieneinheiten für den Fahrer sowie die dazugehörigen Signalwege zur Fahrzeug-Management-Einheit 23. Darunter fallen beispielsweise Fahrpedal, Bremspedal, Betriebsmode-Wahleinheit zur Vorwahl eines sparsamen oder sportlichen Fahrverhaltens usw.

Über die Signalverbindung 24 wird beispielsweise die Motordrehzahl, die Kraftstoff-, die Ansaugluft-, die Kühlmitteltemperatur, der Saugrohrdruck usw an die Fahrzeug-Management-Einheit 23 übermittelt, welche ihrerseits entsprechende Vorgaben an die Verbrennungsmotor 11 abgibt, wie etwa Einspritzmenge, Zündzeitpunkt usw.

Die Signalverbindung 25 ermöglicht beispielsweise für den Fall, dass der Generator 13 nicht-dauermagneterregt ist, die Regelung des Erregerfeldes.

Mittels der Signalverbindung 26 wird der Fahrzeug-Management-Einheit 23 die Spannung U der Gleichstromverbindung 21 und der Batterie 20 übergeben.

Über die Signalverbindung 27 wird die Stromstärke von Imel der Fahrzeug-Management-Einheit 23 übergeben und der Wandler 16 geregelt.

Die Signalverbindung 28 gibt Aufschluss beispielsweise über die Fahrzeuggeschwindigkeit, da der Elektromotor 17 direkt mit einem Antriebsrad 19 gekoppelt ist.

Die erfindungsgemässe Lösung ist, wie bereits erwähnt, für verschiedenste Arten von Hybridfahrzeugen, insbesondere für verschiedenste Arten von Antriebseinheiten einsetzbar.

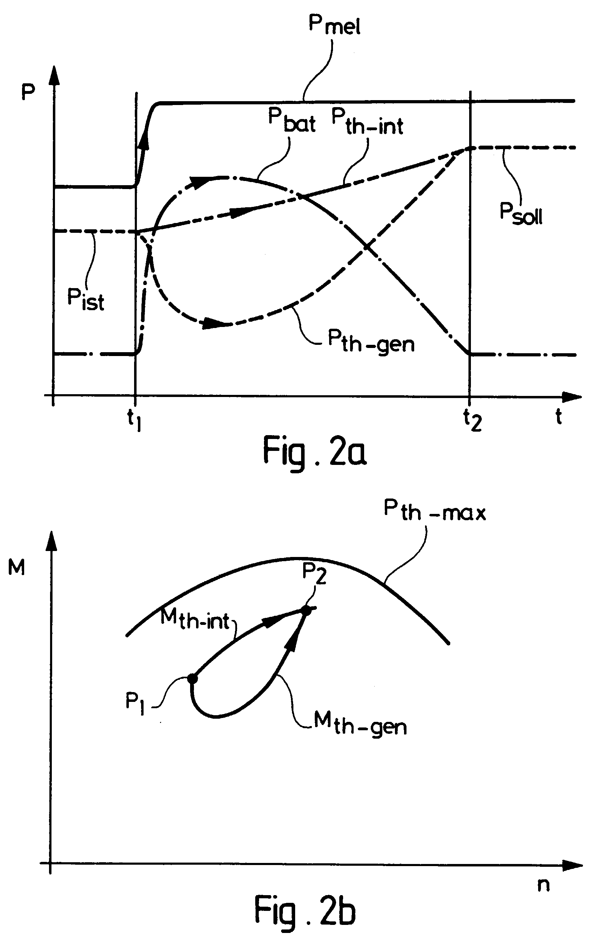

Die in den Figuren 2a/2b, 3a/3b und 4a/4b gezeigten und untenstehend beschriebenen Beispiele einer Leistungsänderung des Verbrennungsmotors beziehen sich demnach nur rein beispielsweise auf die in Figur 1 gezeigte Antriebseinheit 10.

In Figur 2a ist zu einem ersten Betriebsbeispiel der zeitliche Ablauf einer Leistungserhöhung des Verbrennungsmotors, wie dies bei einer bevorstehenden Fahrzeugbeschleunigung oder bei ansteigendem Gefälle erforderlich sein kann in einem Leistungs-Zeitdiagramm (P/t-Diagramm) gezeigt.

In Figur 2a sind vier Graphen dargestellt:
- der Verlauf der auf den Antriebsmotoren 17 geforderten Leistung Pmel,
- der Verlauf der intern vom Verbrennungsmotor 11 erzeugten Leistung Pth-int,
- der Verlauf der vom Verbrennungsmotor 11 an den Generator 13 abgegebenen Leistung Pth-gen sowie
- der Verlauf der von der Batterie 20 abgegebenen Leistung Pbat.

Zugunsten der Einfachheit wird im folgenden auf die Berücksichtigung der Verluste des Verbrennungsmotors 11, des Generators 13, des Wandlers 16, der Batterie 20 und der Antriebsmotoren 17 verzichtet. Wesentlicht zur Erklärung von Beschleunigungsvorgängen hingegen ist der Unterschied zwischen der vom Verbrennungsmotor 11 intern erzeugten Leistung Pth-int und der über die Kurbelwelle tatsächlich an den Generator 13 abgegebenen Leistung Pth-gen.

Mit t1 ist der Zeitpunkt bezeichnet, bei welchem das Fahrpedal verstärkt gedrückt wird, d.h. bei welchem auf den Antriebsmotoren 17 bzw. auf den Antriebsrädern 19 eine Leistungserhöhung erwartet wird.

Bis zum Zeitpunkt t1 wird von einer Betriebssituation ausgegangen, bei welcher den elektrischen Motoren 17 eine konstante Leistung Pmel zugeführt wird, welche der derzeitigen Erwartung des Fahrers bzw. der Fahrpedalstellung entspricht, was bedeutet, dass sich der Verbrennungsmotor 11 vor dem Zeitpunkt t1 bezogen auf seine Leistung im Gleichgewicht befindet, d.h. die intern erzeugte Leistung Pth-int und die von ihm an den Generator 13 abgegebene Leistung Pth-gen haben denselben Wert. Dies, wie erwähnt, unter Vernachlässigung der Verluste. Dieser Leistungswert wird Ist-Leistungswert genannt und mit Pist bezeichnet.

Gemäss der Figur 2a wird dabei rein beispielsweise von einer Situation ausgegangen, bei welcher die Batterie 20 als Grundlast-Energielieferant eingesetzt wird, der Hauptanteil der Leistung Pmel jedoch vom Verbrennungsmotor 11 erzeugt wird. Den elektrischen Motoren 17 wird also die aus der Batterieleistung Pbat und der Generatorleistung Pth-gen bestehende Leistungssumme zugeführt.

Zum Zeitpunkt t1 wird die über das Fahrpedal geforderte Leistungszunahme von der Fahrzeug-Management-Einheit 23 registriert. Entsprechend verschiedener fahrerseitigen Vorgaben, wie beispielsweise sparsamer oder sportlicher Betrieb usw., fahrzeugeigener Zustände, wie etwa Ladezustand der Batterie usw, sowie verschiedener, abgespeicherter Daten, welche Grundlage für einen optimalen Betrieb des Fahrzeuges- bzw. Verbrennungsmotors bilden, wird ein Soll-Betriebspunkt p2 des Verbrennungsmotors 11, siehe Figur 2b, mit einem dazugehörigen Soll-Leistungwert Psoll, siehe Figur 2a, definiert.

Gemäss Figur 2b, welche ebenfalls nur schematisch das Drehmoment-Drehzahlkennlinienfeld (M/n-Kennlinienfeld) zeigt, befindet sich der Verbrennungsmotor 11 bis zum Zeitpunkt t1 im Betriebspunkt p1. Die Betriebspunkte p1 und p2 liegen selbstverständlich unterhalb der maximalen Leistungskurve Pth-max des Verbrennungsmotors 11.

Nachdem nun der Zielbetriebspunkt p2 bekannt ist, wird ein bestimmter Weg im Drehmoment-Drehzahldiagramm von p1 nach p2 festgelegt, der bestimmten Anforderungen gerecht wird. Solche Anforderungen können, wie bereits erwähnt, ein schnellstmöglicher Drehzahlanstieg, ein minimaler Kraftstoffverbrauch, eine minimale Schadstoffemissionen, eine geringstmögliche Lärmentwicklung oder eine grösstmögliche Schonung des Verbrennungsmotors 11 oder eine entsprechende Kombination bzw. ein entsprechender Kompromiss sein.

Zur Wahl eines bestimmten Weges im Drehmoment/Drehzahlkennlinienfeld der Figur 2b greift die Fahrzeug-Management-Einheit 23 auf abgespeicherte Werte zurück, welche beispielsweise Führungsgrössen und Regelparametersätze für verschiedene Regeleinheiten, wie etwa Motorsteuerung oder Einheit zur Regelung des Generatorerregerfeld usw, vorgibt. Diese können, wie schon weiter obenstehend erwähnt, in der Fahrzeug-Management-Einheit 23 integriert sein. Die Motorsteuerung gibt beispielsweise die Drosselklappenstellung des Verbrennungsmotors 11 vor.

Die Antriebseinheit 10 kann so ausgebildet sein, dass die Fahrzeug-Management-Einheit 23 lediglich zum Zeitpunkt t1 auf abgespeicherte Daten zugreift und den verschiedenen Regeleinheiten Führungsgrössen und Regelparametersätze übergibt. Danach arbeiten die verschiedenen Regeleinheiten bis zum Erreichen des Zielbetriebspunktes p2 autonom, jedoch eventuell untereinander gekoppelt.

Es kann auch vorgesehen werden, dass die Fahrzeug-Management-Einheit 23 fortlaufend abgespeicherte Daten abruft, um sie in eventuell umgerechneter Form den Regeleinheiten, die hier also nicht autonom arbeiten, zuzuführen. In diesem Sinne lassen sich fortlaufend beispielsweise in Form von Tabellen gespeicherte Kennlinien abrufen. Als praktisch erweist sich eine Mischform.

Wie in Figur 2a ersichtlich ist, steigt die den Antriebsmotoren 17 zugeführte Leistung Pmel ab t1 nahezu unmittelbar auf den gewünschten, d.h. der Fahrpedalstellung entsprechenden Wert an, während die vom Verbrennungsmotor 11 abgegebene Leistung Pth-gen zunächst deutlich abfällt und dann später wieder ansteigt. Da die erfindungsgemässe Lösung vorsieht, diesen Leistungsfehlbetrag durch die Batterie 20 auszugleichen, steigt die von ihr abgegebene Leistung Pbat stark an und sinkt erst beim Ansteigen der Leistung Pth-gen wieder ab, so dass sich die auf die Antriebsräder 19 geführte Leistung Pmel bereits nahezu unmittelbar nach t1 konstant auf dem der Pedalstellung entsprechenden Soll-Fahrleistungwert befindet.

Analog dazu geht aus Figur 2b hervor, dass der Verlauf des intern im Verbrennungsmotor 11 erzeugten Drehmomentes Mth-int von p1 zu p2 oberhalb des Verlaufes des Generatordrehmomentes Mth-gen liegt, d.h. dass zwischen p1 und p2 das Drehmoment Mth-int immer grösser als das Drehmoment Mth-gen ist.

Gemäss der Kurve Mth-int steigt das erzeugte Drehmoment des Verbrennungsmotors 11 kontinuierlich mit der Drehzahl an, während der Verlauf des Generatordrehmomentes Mth-gen bei zunehmender Drehzahl zunächst absinkt und erst später wieder ansteigt. Die resultierende Drehmoment-Differenz wird zum gezielten Ablauf der Drehzahlerhöhung der Verbrennungsmotor/Generatoreinheit 14 wiederum dahingehend genützt, dass während der Betriebszustandsänderung des Verbrennungsmotors optimale Betriebsbedingungen herrschen.

Zum Zeitpunkt t2 erreicht der Verbrennungsmotor 11 den angestrebten Zielbetriebspunkt p2. Von da an befindet sich dieser wieder im Leistungs-Gleichgewicht, d.h. Pth-int und Pth-gen haben denselben Wert.

Es sei ausdrücklich darauf hingewiesen, dass die mit Pth-gen bezeichnete Kurve den Verlauf der vom Verbrennungsmotor 11 an den Generator 13 abgegebenen Leistung entspricht. Die intern durch Verbrennung erzeugte Leistung Pth-int ist zwischen t1 und t2 höher als die abgegebene, damit eine Beschleunigung des Verbrennungsmotors 11 erfolgen kann.

Selbstverständlich muss das Fahrzeug den Vorgaben des Fahrers nicht sofort Folge leisten, da eine Verzögerung von beispielsweise einer halben Sekunde kaum wahrgenommen wird. Diese Zeitspanne kann bereits zum Einstellen optimaler Betriebsbedingungen, d.h. zum Verschieben des Arbeitspunktes des Verbrennungsmotors 11 genutzt werden, ohne dass die Batterie 20 bereits zusätzlich Leistung abgeben muss. Dies erlaubt auch einen sanften Einsatz der Batterie, was für deren Lebensdauer von Vorteil ist. Zwecks Übersichtlichkeit wurde in Figur 2a, 3a und 4a auf die explizite Darstellung dieser Verzögerung jedoch verzichtet.

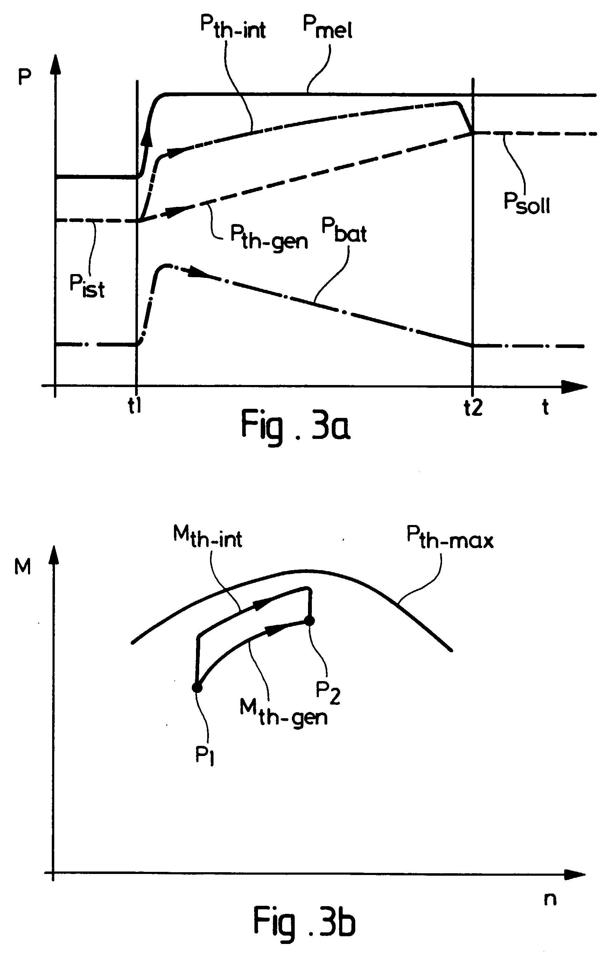

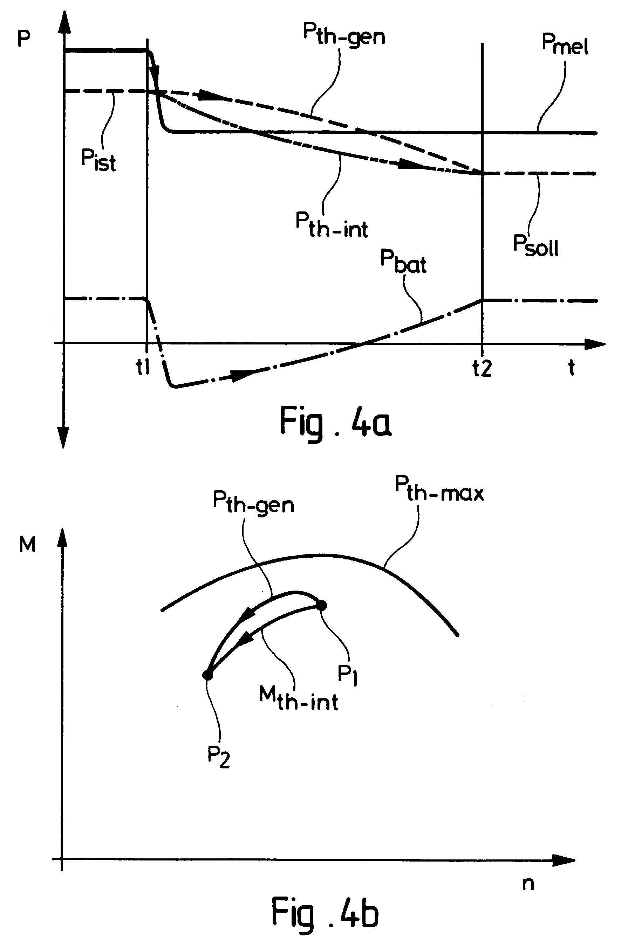

Im folgenden wird für das in den Figuren 3a und 3b gezeigte, zweite Betriebsbeispiel sowie für das in den Figuren 4a und 4b gezeigte, dritte Betriebsbeispiel nur noch auf die Unterschiede in Bezug auf das erste Beispiel und den entsprechenden Figuren 2a und 2b eingegangen.

Figur 3a zeigt im Gegensatz zur Figur 2a ein Beispiel zum erfindungsgemässen Verfahren, bei welchem die an den Generator 13 abgegebene Leistung Pth-gen zunächst nicht abfällt, sondern gleich monoton ansteigt. Auch in einem solchen Fall kann eine Energieabgabe der Batterie 20 eine vorteilhaftere Betriebszustandsänderung der Verbrennungsmotor bewirken.

Gemäss Figur 3b kann in diesem Fall das vom Verbrennungsmotor 11 erzeugte Drehmoment Mth-int und somit die entsprechende Leistung Pth-int zunächst schnell zunehmen, indem beispielsweise bei einem Ottomotor die Drosselklappe geöffnet wird. Danach wird die Drehzahl unter beispielsweise leichter Erhöhung der Leistung kontinuierlich erhöht und anschliessend das Drehmoment Mth-int und somit die Leistung Pth-int wieder reduziert, d.h. die Drosselklappenöffnung wieder verkleinert.

Die Figuren 4a und 4b zeigen ein drittes Betriebsbeispiel, bei welchem im Gegensatz zu den beiden ersten auf den Fall einer Leistungsreduktion des Verbrennungsmotors 11 eingegangen wird.

Figur 4a zeigt unmittelbar nach dem Zeitpunkt t1 eine relativ plötzliche Absenkung der auf die Antriebsräder wirkenden Leistung Pmel, wie es bei einem mehr oder weniger sofortigen Zurücknehmen des Fahrpedals gewünscht wird.

Anstelle einem Nachführen der vom Verbrennungsmotor 11 erzeugten Leistung Pth-int entlang dieser extremen, steil abfallenden Kurve Pmel, was wiederum einen ungünstigen Betrieb bedeuten würde, kann durch einen gezielten Einsatz der Batterie 20 eine hier zum Beispiel sanft abfallende Leistungskurve Pth-int mit optimalen Verhältnissen vorgesehen werden. Damit tatsächlich eine Leistungsverminderung eintritt, muss analog zu den vorherigen Beispielen das leistungsmässige Gleichgewicht des Verbrennungsmotors 11 kurzfristig aufgehoben werden, wobei im hier beschiebenen Fall die Kurve der vom Verbrennungsmotor 11 abgegebenen bzw. vom Generator 13 aufgenommenen Leistung Pth-gen oberhalb der Kurve der intern erzeugten Leistung Pth-int zu liegen kommt.

Gemäss des Batterieleistungsverlaufes Pbat von Figur 4a wirkt die Batterie 20 als Auffangspeicher für die überschüssig produzierte Leistung, die der Differenz von Pmel und Pth-gen entspricht. Da auch in diesem dritten Beispiel von einem Dauereinsatz der Batterie 20 vor t1 und nach t2 ausgegangen wird, wechselt diese vom Entladezustand kurzzeitig in den Ladezustand über.

Falls überschüssige elektrische Leistung in einem Mass anfällt, dass die Batterie 20 zu deren Aufnahme den maximal zulässigen Ladestrom überschreiten müsste, kann der nicht aufnehmbare Leistunganteil über einen zusätzlich vorgesehenen Widerstand abgeführt werden.

Die erfindungsgemässe Lösung erlaubt also auch beim Absinken der Fahrleistung bzw. der Leistung des Verbrennungsmotors 11 optimale Betriebsverhältnisse des letzteren.

Übrigens wird in allen drei Beispielen deshalb von einem Dauereinsatz der Batterie 20 ausgegangen, damit sich eine übersichtlichere Darstellung ergibt und sich die Kurven Pmel und Pth-gen bis zum Zeitpunkt t1 und von t2 an nicht überdecken. Selbstverständlich kann die Batterie 20 grundsätzlich bis zum Zeitpunkt t1 und vom Zeitpunkt t2 an auch keine Energie abgeben, also nicht als Grundlast-Energiequelle arbeiten, oder sogar vom Generator 13 geladen werden. Entscheidend ist, dass die Batterie 20 während der Leistungszu- oder -abnahme des Verbrennungsmotors 11 Energie abgibt oder aufnimmt, um diesen immer in ausgewählten Betriebspunkten arbeiten zu lassen.

Im folgenden wird näher auf den Einsatz der Batterie eingegangen. Aus Figur 2a ist klar ersichtlich, dass die Leistungskurve Pth-gen zwischen den Zeitpunkten t1 und t2 abfallen darf, da die Batterie für entsprechenden Leistungsersatz sorgt. Da sich die Batterie im gezeigten Beispiel bereits vor dem Zeitpunkt t1 im Entladezustand befindet, muss ihre Energieabgabe demnach zwischen t1 und t2 in verstärktem Masse erfolgen.

Selbstverständlich sind auch andere Betriebsarten der Batterie denkbar. Beispielsweise kann bis zum Zeitpunkt t1 und nach t2 eine starke Ladung der Batterie vorgesehen werden. Während dem dazwischenliegenden Intervall hat die Ladung dann lediglich weniger ausgeprägt zu erfolgen. Im Extremfall kann währenddessen sogar in den Entladebetrieb übergegangen werden.

Anders ausgedrückt bedeutet dies, dass der Graph der Batterieleistung Pbat vertikal verschiebbar ist, sei er der Form gemäss Figur 2a, 3a, 4a oder anders.

Dieselben Überlegungen sind selbstverständlich auch für den Fall einer Leistungs- bzw. Drehzahlsenkung des Verbrennungsmotors zutreffend.

Bezugnehmend auf das dritte Beispiel gemäss Figur 4a herangezogen werden. Da sich die Batterie hier bereits vor dem Zeitpunkt t1 im Entladezustand befand, muss dem-nach zwischen t1 und t2 die Abgabe von Energie reduziert werden. Diese Reduktion kann das in Figur 4a gezeigte Mass annehmen, dass eventuell kurzzeitig in den Ladezustand übergegangen werden muss.

Im Falle hingegen, bei welchem zum Zeitpunkt t1 eine starke Ladung der Batterie im Gange war, kann zwischen t1 und t2 lediglich eine noch ausgeprägtere Ladung erfolgen, so dass der Verlauf der vom Verbrennungsmotor abgegebenen Leistung Pth-gen wiederum betriebsgünstig ausfällt.

Auch im Fall einer Leistungs- bzw. Drehzahlreduktion des Verbrennungsmotors kann also der Graph der Batterieleistung Pbat vertikal verschoben werden.

Es kann übrigens auch sinnvoll sein, dass die Leistung des Verbrennungsmotors nicht im Verhältnis zur Fahrpedalbetätigung zunimmt. Beispielsweise kann die Leistung des Verbrennungsmotors um 20% vergrössert werden, obwohl nur eine 10%-ige oder eine 30%-ige Fahrleistungszunahme gefordert wird, damit ungünstige Betriebsbereiche des Verbrennungsmotors umgangen werden können.

Durch die erfinderische Lösung ist auch eine vollständige oder gezielt gemässigte Entlastung der Verbrennungsmotor während dem Anlassvorgang im Stillstand oder während der Fahrt durchführbar.

Grundsätzlich gibt es verschiedene Möglichkeiten zur Leistungs- bzw. Drehzahlanpassung des Verbrennungsmotors:

Eine Möglichkeit besteht in der sequentiellen Veränderung der Betriebsgrössen des Verbrennungsmotors und anschliessend des Generators, d.h. es kann beispielsweise zunächst die Drosselklappenöffnung, der Generatorstrom und wieder die Drosselklappenöffnung verändert werden.

Eine weitere Möglichkeit besteht darin, die Betriebsgrössen der Verbrennungsmotor und des Generators gleichzeitig zu verändern.

Sehr einfach und effizient ist eine weitere Lösung, bei welcher die Drosselklappe des Verbrennungsmotors dauern vollständig offengehalten wird, während die Leistung bzw. Drehzahl des Verbrennungsmotos nur über den als Last wirkenden Generator geregelt wird. Auf diese Weise kann sogar auf eine Drosselklappe verzichtet werden und es ist eventuell nur noch eine als nicht-kontinuierliche Schutzvorrichtung arbeitende Drossel vorzusehen.

Die erfinderische Lösung ist, wie erwähnt, gleichermassen für Parallel-Hybridfahrzeuge geeignet. Analog zum Serie-Hybridfahrzeug, bei welchem der Strom vom Generator und der Strom von der Batterie addiert werden, kann beim Parallel-Hybridfahrzeug eine Addition der Leistung über die Drehmomente erfolgen. Einerseits wird über den aus Verbrennungsmotor, Kupplung, Getriebe und Differentialgetriebe bestehenden mechanischen Antriebsstrang ein Drehmoment auf die Antriebsräder übertragen, anderseits wirkt das Drehmoment des von der Batterie gespeisten Elektromotors ebenfalls auf die Antriebsräder. Die in den Figuren 2a/2b, 3a/3b und 4a/4b gezeigte Situation kann also auf Parallel-Hybridfahrzeuge oder Mischformen übertragen werden.

Im Fall der erfindungsmässigen Leistungs- bzw. Drehzahlsenkung des Verbrennungsmotors eines hier nicht gezeigten Parallel-Hybridfahrzeuges arbeiten die Antriebsmotoren als Generatoren und nehmen die vom Verbrennungsmotor produzierte Überschussleistung auf und geben sie an die Batterie weiter.

Die erfindungsgemässe Lösung ist insbesondere für deutliche Unterschiede zwischen Soll- und Ist-Leistungen bzw. zwischen Soll- und Ist-Drehzahlen vorgesehen. Bei einer sehr geringen Differenz kann eventuell auf deren Anwendung verzichtet werden. Es ist wiederum die Fahrzeug-Management-Einheit, welche entscheidet, ob und wie die Batterie zum Einsatz kommt. Selbstverständlich wird dabei auch dem Ladezustand sowie einem vor allem hinsichtlich Lebensdauer optimalen Betrieb der Batterie Rechnung getragen.

Es kann zwecks Einhaltung optimaler Betriebsbedingungen sinnvoll sein, auch für den Fall, dass keine Veränderung der Leistung vorzunehmen ist, den elektrischen Energiespeicher zur Verschiebung des Arbeitspunktes des Verbrennungsmotors einzusetzen. Während einer kurzeitigen Entlastung des Verbrennungsmotors kann bei nahezu gleichbleibender Leistung durch Erhöhung der Drehzahl und Verringerung des Drehmomentes, d.h. Verkleinerung des Drosselklappenwinkels, oder durch Senkung der Drehzahl und Vergrösserung des Drehmomentes ein wiederum hinsichtlich Kraftstoffverbrauch, Schadstoffemission, Lärmbildung und Maschinenschonung günstigerer Betriebspunkt erreicht werden. Die erfinderische Lösung ist auch für diesen Fall in gleicher Weise vorteilhaft, d.h. auch bei Drehzahländerungen bei konstanter Leistung des Verbrennungsmotors.

Das erfindungsgemässe Verfahren erlaubt eine rasche, hinsichtlich Kraftstoffverbrauch, Schadstoffemissionen, Lärmemissionen, Maschinenschonung und/oder beliebiger weiterer Anforderungen optimale Leistungs- und/oder Drehzahländerung des Verbrennungsmotors.

## Patentansprüche

1. Verfahren zur Betriebszustandsänderung einer eine mechanische Leistung (Pth-int) erzeugende Brennkraftmaschine (11, Mth) eines Hybridfahrzeuges, das mindestens eine in mechanischer Verbindung (18) zur Übertragung mechanischer Leistung (Pmel) mit mindestens einem Antriebsrad (19) stehende, erste Elektromaschine (17, Mel) sowie einen in elektrischer Verbindung (15, 21, 22,) zur Übertragung von elektrischer Leistung mit der ersten Elektromaschine (17, Mel) stehenden, elektrischen Energiespeicher (20, Bat) aufweist, wobei der Verlauf der über die mechanische Verbindung (18) übertragenen Leistung (Pmel) unverzüglich einer Vorgabe nachgeführt wird und der elektrische Energiespeicher (20, Bat) mindestens zeitweise während der Betriebszustandänderung der Brennkraftmaschine (11, Mth) als Zwischenspeicher wirkend Leistung abgibt oder aufnimmt,
dadurch gekennzeichnet, dass die Brennkraftmaschine (11, Mth) während der Betriebszustandsänderung durch bestimmte, ausgewählte Betriebspunkte im Brennkraftmaschinen-Kennlinienfeld geführt wird, die hinsichtlich mindestens eines Betriebsparameters, insbesondere hinsichtlich minimalem Kraftstoffverbrauch und /oder minimaler Schadstoffemission und/oder minimaler Geräuschentwicklung und/oder bestmöglicher Maschinenschonung optimal sind, und/oder eine schnelle Drehzahländerung der Brennkraftmaschine (11, Mth) zulassen, ohne besondere Rücksichtnahme auf den Verlauf der von der Brennkraftmaschine (11, Mth) erzeugten Leistung (Pth-int).

2. Verfahren nach Anspruch 1, dadurch gekennzeichnet, dass die Betriebszustandsänderung eine Drehzahländerung der Brennkraftmaschine (11, Mth) umfasst.

3. Verfahren nach Anspruch 2, dadurch gekennzeichnet, dass die Betriebszustandsänderung innerhalb eines Zeitintervalles stattfindet, zu dessen Beginn ein Ist-Betriebszustand (p1) mit einem Ist-Drehzahlwert vorliegt und an dessen Ende ein Soll-Betriebszustand (p2) mit einem Soll-Drehzahlwert erreicht werden soll.

4. Verfahren nach Anspruch 3, dadurch gekennzeichnet, dass die Betriebszustandsänderung eine Drehzahlerhöhung der Brennkraftmaschine (11, Mth) umfasst und dass der elektrische Energiespeicher (20, Bat) mindestens zeitweise während dem Zeitintervall im Vergleich zum Zeitpunkt (t1) des Ist-Betriebszustandes (p1) und zum Zeitpunkt (t2) des Soll-Betriebszustandes (p2) intensiver entladen oder weniger intensiv geladen wird.

5. Verfahren nach Anspruch 3, dadurch gekennzeichnet, dass die Betriebszustandsänderung eine Drehzahlsenkung der Brennkraftmaschine (11, Mth) umfasst und dass der elektrische Energiespeicher (20, Bat) mindestens zeitweise während dem Zeitintervall im Vergleich zum Zeitpunkt (t1) des Ist-Betriebszustandes (p1) und zum Zeitpunkt (t2) des Soll-Betriebszustandes (p2) weniger intensiv entladen oder intensiver geladen wird.

6. Serie-Hybridfahrzeug zur Ausführung des Verfahrens nach einem der vorangehenden Ansprüche, dadurch gekennzeichnet, dass das Hybridfahrzeug eine zweite Elektromaschine (13, Gen) aufweist, welche mit der Brennkraftmaschine (11, Mth) in mechanischer Antriebsverbindung (12) steht und als Generator betreibbar von der Brennkraftmaschine (11, Mth) abgegebene mechanische Leistung in elektrische Leistung wandeln kann.

7. Parallel-Hybridfahrzeug zur Ausführung des Verfahrens nach einem der vorangehenden Ansprüche, dadurch gekennzeichnet, dass die Brennkraftmaschine (11, Mth) in mechanischer Antriebsverbindung mit mindestens einem Antriebsrad (19) steht.

8. Verfahren nach einem der vorangehenden Ansprüche, dadurch gekennzeichnet, dass als Brennkraftmaschine (11, Mth) ein Ottomotor ohne Luftmengensteuerung vorgesehen ist.
